# EUROPÄISCHE PATENTSCHRIFT

(11) **EP 1 795 435 B1**
(45) Veröffentlichungstag und Bekanntmachung des Hinweises auf die Patenterteilung: **19.01.2011**
(21) Anmeldenummer: 06023863.1
(22) Anmeldetag: 17.11.2006
(51) Int. Cl.: B62D 43/04

(54) **Haltevorrichtung für ein Ersatzrad**
Spare wheel cradle
Berceau pour roue de secours

(30) Priorität: 06.12.2005 DE 202005019118 U
(43) Veröffentlichungstag der Anmeldung: 13.06.2007
(73) Patentinhaber: Karagün, Ahmed, 89362 Offingen (DE)
(72) Erfinder: Karagün, Ahmed, 89362 Offingen (DE)
(74) Vertreter: Schwarz, Thomas

(56) Entgegenhaltungen:
- FR-A1- 2 378 667
- GB-A- 1 576 808
- US-A- 4 526 021
- US-A- 4 765 051

## Beschreibung

Die Erfindung betrifft eine Haltevorrichtung für ein Ersatzrad nach dem Oberbegriff des Anspruchs 1.

Ersatzräder sind besonders bei Nutzfahrzeugen vielfach in speziellen Halterungen an der Unterseite des Fahrzeugs angebracht. Diese Halterungen bestehen, wie in gattungsgemäss beschriebener Haltevorrichtung aus dem Dokument FR-2 378667 üblicherweise aus verformten Hohlprofilen, die an dem Fahrzeugrahmen oder Fahrzeuggestell befestigt werden. An den Enden der Hohlprofile werden zu deren Befestigung am Fahrzeug bisher spezielle Anschlussprofile oder Anschlussbleche angeschweißt. Dies erfordert allerdings einen zusätzlichen Material- und Fertigungsaufwand. Außerdem können sich durch die Schweißnähte Kerbwirkungen ergeben, durch welche die Festigkeit der Haltevorrichtung beeinträchtigt werden kann.

Aufgabe der Erfindung ist es, eine Haltevorrichtung der eingangs genannten Art zu schaffen, die einfach und kostengünstig hergestellt und montiert werden kann.

Diese Aufgabe wird durch eine Haltevorrichtung mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Haltevorrichtung ist in dem Endbereich des Hohlprofils zu dessen Verstärkung eine Einlage angeordnet. Diese Einlage kann in die Enden des Hohlprofils einfach eingesetzt und mit diesem verformt werden. Durch die Verformung und Prägung der durch die Einlagen verstärkten Endbereiche werden diese so verstärkt, dass die Hohlprofile auch ohne zusätzliche Anschlussprofile oder Anschlussbleche an dem Fahrzeug befestigt werden können. Dadurch kann die Herstellung einfacher und kostengünstiger erfolgen. Die Haltevorrichtungen weisen außerdem keine Schweißnähte auf, wodurch eine Bruchgefahr verringert und die Festigkeit verbessert wird.

Die Einlage wird zweckmäßigerweise beim Verformen des Endbereichs zusammen mit dem Hohlprofil gebogen und durch Prägen des Endbereichs innerhalb des Hohlprofils gehalten. Dadurch sind keine zusätzlichen Befestigungselemente erforderlich.

In einer besonders zweckmäßigen Ausführung weist der Endbereich bzw. weisen die Endbereiche an der Unterseite eine eingeprägte Sicke auf.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Haltevorrichtung für ein Ersatzrad in einer schematischen Vorderansicht;
- **Figur 2**: die Haltevorrichtung von Figur 1 in einer Seitenansicht;
- **Figur 3**: ein Hohlprofil der in Figur 1 gezeigten Vorrichtung mit Einlage und
- **Figur 4**: eine Schnittansicht entlang der Linie A-A von Figur 3.

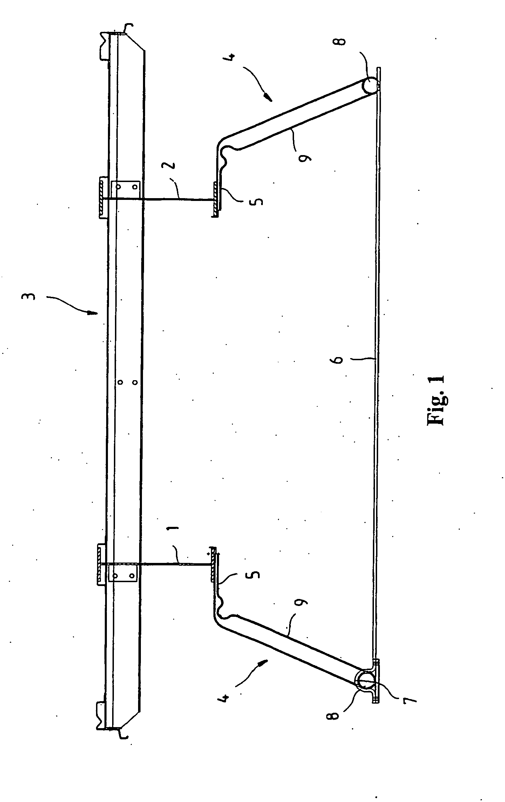

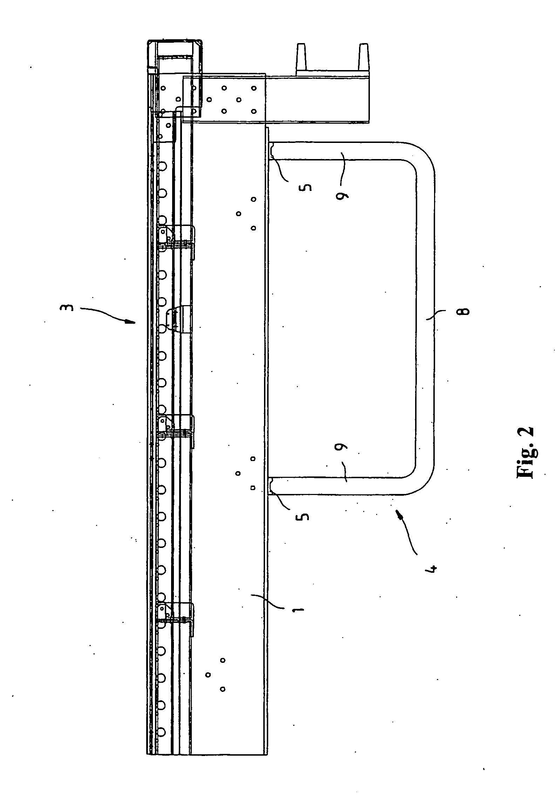

In den Figuren 1 und 2 ist eine an der Unterseite eines Fahrzeugs angeordnete Haltevorrichtung für ein Ersatzrad in einer schematischen Vorder- und Seitenansicht gezeigt. Die Haltevorrichtung enthält zwei an Trägem 1 und 2 eines Fahrgestells oder Fahrzeugrahmens 3 befestigbare rohrförmige Hohlprofile 4, die in Form eines Bügels gebogen sind und an ihren beiden Enden einen durch Biegen und Prägen verformten Endbereich 5 aufweisen. Die beiden rohrförmigen Hohlprofile 4 sind durch eine in Figur 1 dargestellte Querstrebe 6 miteinander verbunden. Die Hohlprofile 4 und die Verbindungsstütze 6 dienen zur Auflage und zur Halterung eines Ersatzrades, wobei an der Querstrebe 6 - nicht dargestellte - Befestigungselemente zur Fixierung des Ersatzrades angebracht sein können. Die Querstrebe 6 ist durch in Figur 1 links dargestellte Rohrschellen 7 mit den beiden Hohlprofilen 4 verbunden.

Wie aus Figur 2 hervorgeht, weisen die beiden Hohlprofile 4 einen waagrechten unteren Auflageteil 8 und zwei nach oben umgebogene parallele Schenkel 9 mit den nach innen umgebogenen und durch Prägen verformten Endbereichen 5 an deren Enden auf. Die beiden Schenkel 9 sind gemäß Figur 1 von dem unteren Auflageteil 8 schräg nach oben umgebogen.

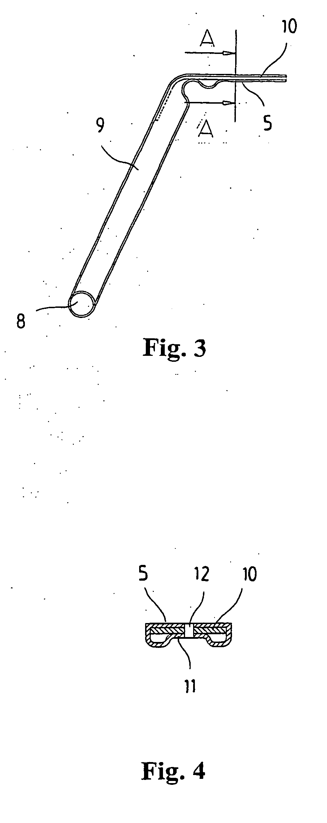

In den beiden Endbereichen 5 sind die rohrförmigen Hohlprofile 4 durch ein entsprechendes Prägewerkzeug zusammengedrückt und nach innen umgebogen. In den Figuren 3 und 4 ist erkennbar, dass in die beiden Enden der Hohlprofile 4 eine hier als Flachstahl ausgeführte Einlage 10 eingesetzt ist. Diese Einlage 10 wird vor dem Prägen und Biegen der Endbereiche 5 in die Enden der Hohlprofile 4 eingesetzt. Die Einlage 10 verläuft bis in die Schenkel 9, so dass sie beim Biegen der Hohlprofile mit umgebogen wird. An der Unterseite des Hohlprofils wird außerdem eine in Figur 4 erkennbare Sicke 11 eingeprägt. Die Einlage 10 wird so auch ohne zusätzliche Befestigungselemente sowohl durch die Biegung als auch durch das Zusammendrücken des Hohlprofils im Endbereich 5 gehalten. Gleichzeitig mit der Prägung der Sicke 11 oder in einem anschließenden Arbeitsgang können in den Endbereichen 5 auch Löcher 12 für Befestigungsschrauben oder dgl. eingebracht werden. Durch die Verformung und Prägung der durch die Einlagen 11 verstärkten Endbereiche 5 werden diese so verstärkt, dass sie auch ohne zusätzliche Anschlussprofile am Fahrzeug befestigt werden können.

Die Hohlprofile bestehen vorzugsweise aus Stahlrohren mit kreisrundem Querschnitt, die zum Korrosionsschutz z.B. verzinkt sind oder einer anderen Oberflächenbehandlung unterzogen werden.

## Patentansprüche

1. Haltevorrichtung für ein Ersatzrad, mit einem oder mehreren an dem Fahrzeug befestigbaren Hohlprofilen (4), die zur Auflage und lösbaren Halterung des Fahrzeugteils verformt sind und mindestens einen durch Prägen geformten Endbereich (5) zur Befestigung am Fahrzeug aufweisen, wobei in dem Endbereich (5) des Hohlprofils (4) eine Einlage (10) zur Verstärkung des Endbereichs (5) angeordnet ist, **dadurch gekennzeichnet, dass** die Einlage (10) beim Verformen des Endbereichs (5) zusammen mit dem Hohlprofil (4) gebogen und durch Prägen des Endbereichs (5) innerhalb des Hohlprofils (4) gehalten ist.

2. Haltevorrichtung nach Anspruch 1, **dadurch gekennzeichnet, dass** der Endbereich (5) des Hohlprofils (4) an der Unterseite einen eingeprägte Sicke (11) enthält.

3. Haltevorrichtung nach Anspruch 1 oder 2, **dadurch gekennzeichnet, dass** im Endbereich (5) des Hohlprofil (4) entsprechende Löcher (12) zur Befestigung angeordnet sind.

4. Haltevorrichtung nach einem der Ansprüche 1 bis 3, **dadurch gekennzeichnet, dass** das Hohlprofil (4) einen unteren Auflageteil (8) und zwei nach oben umgebogenen parallele Schenkel (9) enthält, an deren Enden sich die verformten Endbereiche (5) befinden.

5. Haltevorrichtung nach Anspruch 4, **dadurch gekennzeichnet, dass** die beiden Schenkel (9) vom Auflageteil (8) schräg nach oben umgebogen sind.

6. Haltevorrichtung nach einem der Ansprüche 1 bis 5, **dadurch gekennzeichnet, dass** die Endbereiche (5) des Hohlprofils (4) nach innen umgebogen sind.

7. Haltevorrichtung nach einem der Ansprüche 1 bis 6, **dadurch gekennzeichnet, dass** die Einlage (10) als Flachstahl ausgeführt ist.

8. Haltevorrichtung nach einem der Ansprüche 1 bis 7, **dadurch gekennzeichnet, dass** das Hohlprofil (4) aus einem Rohr mit kreisrundem Querschnitt besteht.

9. Haltevorrichtung nach einem der Ansprüche 1 bis 8, **dadurch gekennzeichnet, dass** sie zwei durch eine Querstrebe (9) miteinander verbundene Hohlprofile (4) enthält.

10. Haltevorrichtung nach Anspruch 9, **dadurch gekennzeichnet, dass** die Querstrebe (9) über Rohrschellen (7) mit den Hohlprofilen (4) verbunden ist.

## Claims

1. Holding device for a spare wheel, with one or more hollow profiles (4) which can be fastened to the vehicle and which are formed for support and detachable holding of the vehicle part and exhibit at least one end region (5) formed by pressing for fastening to the vehicle, wherein an inlay (10) for reinforcing the end region (5) is arranged in the end region (5) of the hollow profile (4), **characterised in that** when the end region (5) is formed, the inlay (10) is bent together with the hollow profile (4) and held inside the hollow profile (4) by pressing of the end region (5).

2. Holding device according to claim 1, **characterised in that** the end region (5) of the hollow profile (4) comprises a pressed bead (11) on the underside.

3. Holding device according to claim 1 or 2, **characterised in that** corresponding holes (12) for fastening are arranged in the end region (5) of the hollow profile (4).

4. Holding device according to one of claims 1 to 3, **characterised in that** the hollow profile (4) comprises a lower supporting part (8) and two parallel limbs (9) which are bent over upwards and at the ends of which the formed end regions (5) are located.

5. Holding device according to claim 4, **characterised in that** the two limbs (9) of the supporting part (8) are bent over upwards at an oblique angle.

6. Holding device according to one of claims 1 to 5, **characterised in that** the end regions (5) of the hollow profile (4) are bent over inwards.

7. Holding device according to one of claims 1 to 6, **characterised in that** the inlay (10) is embodied as a flat steel bar.

8. Holding device according to one of claims 1 to 7, **characterised in that** the hollow profile (4) consists of a tube with a circular cross-section.

9. Holding device according to one of claims 1 to 8, **characterised in that** it comprises two hollow profiles (4) which are connected to one another by a transverse brace (9).

10. Holding device according to claim 9, **characterised in that** the transverse brace (9) is connected to the hollow profiles (4) by means of pipe clips (7).

## Revendications

1. Berceau pour une roue de secours avec un ou plusieurs profilés creux (4) pouvant être fixés sur le véhicule, qui sont déformés pour l'appui et la fixation amovible de la partie de véhicule et présentent au moins une zone d'extrémité (5) formée par gaufrage pour la fixation sur le véhicule, dans la zone d'extrémité (5) du profilé creux (4) étant disposée une pièce intercalaire (10) pour le renforcement de la zone d'extrémité (5), **caractérisé en ce que** la pièce intercalaire (10) est pliée lors de la déformation de la zone d'extrémité (5) conjointement avec le profilé creux (4) et est maintenue par le gaufrage de la zone d'extrémité (5) dans le profilé creux (4).

2. Berceau selon la revendication 1, **caractérisé en ce que** la zone d'extrémité (5) du profilé creux (4) contient une moulure gaufrée (11) sur le côté inférieur.

3. Berceau selon la revendication 1 ou 2, **caractérisé en ce que** des trous correspondants (12) pour la fixation sont disposés dans la zone d'extrémité (5) du profilé creux (4).

4. Berceau selon l'une quelconque des revendications 1 à 3, **caractérisé en ce que** le profilé creux (4) contient une partie d'appui inférieure (8) et deux branches (9) parallèles repliées vers le haut, sur les extrémités desquelles se trouvent les zones d'extrémité (5) déformées.

5. Berceau selon la revendication 4, **caractérisé en ce que** les deux branches (9) de la partie d'appui (8) sont repliées en biais vers le haut.

6. Berceau selon l'une quelconque des revendications 1 à 5, **caractérisé en ce que** les zones d'extrémité (5) du profilé creux (4) sont repliées vers l'intérieur.

7. Berceau selon l'une quelconque des revendications 1 à 6, **caractérisé en ce que** la pièce intercalaire (10) est réalisée comme un acier plat.

8. Berceau selon l'une quelconque des revendications 1 à 7, **caractérisé en ce que** le profilé creux (4) se compose d'un tube avec une section transversale circulaire.

9. Berceau selon l'une quelconque des revendications 1 à 8, **caractérisé en ce qu'**il contient deux profilés creux (4) reliés l'un à l'autre par une entretoise (9).

10. Berceau selon la revendication 9, **caractérisé en ce que** l'entretoise (9) est reliée par des colliers d'attache pour tuyaux (7) aux profilés creux (4).
